# FASCICULE DE BREVET EUROPEEN

(11) **EP 3 935 760 B1**
(45) Date de publication et mention de la délivrance du brevet: **26.04.2023**
(21) Numéro de dépôt: 20725806.2
(22) Date de dépôt: 02.03.2020
(51) Int. Cl.: H04B 10/61

(54) **DISPOSITIF DE DÉTECTION COHÉRENTE SIMPLIFIÉE SANS PERTE OPTIQUE**
VORRICHTUNG ZUR KOHÄRENTEN DETEKTION AUF VEREINFACHTE WEISE UND OHNE OPTISCHEN VERLUST
DEVICE FOR COHERENTLY DETECTING IN A SIMPLIFIED WAY AND WITHOUT OPTICAL LOSS

(30) Priorité: 05.03.2019 FR 1902215
(43) Date de publication de la demande: 12.01.2022
(73) Titulaire: Orange, 92130 Issy-les-Moulineaux (FR)
(72) Inventeur: CHANCLOU, Philippe, 92326 CHÂTILLON CEDEX (FR)
(86) Numéro de dépôt international: PCT/FR2020/050414
(87) Numéro de publication internationale: WO 2020/178516

(56) Documents cités:
- SEZER ERKILINC M ET AL: "Comparison of Low Complexity Coherent Receivers for UDWDM-PONs (lambda-to-the-user)", ARXIV.ORG, CORNELL UNIVERSITY LIBRARY, 201 OLIN LIBRARY CORNELL UNIVERSITY ITHACA, NY 14853, 2 novembre 2017 (2017-11-02), XP080834793,
- CIARAMELLA ERNESTO: "Polarization-Independent Receivers for Low-Cost Coherent OOK Systems", IEEE PHOTONICS TECHNOLOGY LETTERS, IEEE SERVICE CENTER, PISCATAWAY, NJ, US, vol. 26, no. 6, 1 mars 2014 (2014-03-01), pages 548-551, XP011540387, ISSN: 1041-1135, DOI: 10.1109/LPT.2013.2296943 [extrait le 2014-02-18] cité dans la demande

## Description

### 1. Domaine de l'invention

L'invention se situe dans le domaine des télécommunications par fibres optiques, et plus particulièrement celui des récepteurs de signal optique, tels par exemple les terminaux optiques de lignes (OLT) ou les terminaux optiques de réseaux (ONT) utilisés dans les réseaux optique passifs (PON).

### 2. Etat de la technique antérieure

Une des grandes difficultés dans la détection, côté réception, de données véhiculées dans un signal optique, provient de l'atténuation de ce signal pendant son voyage dans le milieu optique. Une technique utilisée consiste, à l'arrivée du signal, d'une part à multiplier le signal optique par un autre signal optique de fréquence proche (nommé signal d'oscillation). Cette multiplication des signaux optiques n'est effective que si les deux signaux optiques sont sur le même axe de polarisation. Il faut par contre limiter l'effet dû à l'évolution permanente de l'état de polarisation optique du signal optique qui se propage dans la fibre vis-à-vis de l'état de polarisation de l'oscillateur optique, qui, lui, reste statique. Cette technique est appelée détection cohérente optique par la suite. Le document "Polarization-independent receivers for low-cost coherent OOK systems" de Ernesto Ciaramella, Photonics Technology Letters, Vol 26, No 6, publié le 15 mars 2014, décrit un système apportant une solution. Ce système de communication pour réseau optique comprend: un circuit à ondes lumineuses comprenant des fibres optiques monomodes et multimodes, un coupleur de fibre optique pour former un combineur optique 3x3 avec en entrée et en sortie de la fibre monomode. Cette technique est également décrite dans le document "Comparison of Low Complexity Coherent Receivers for UDWDM-PONs (lambda-to-the-user)" de Sezer Erkilink, 02-11-2017.

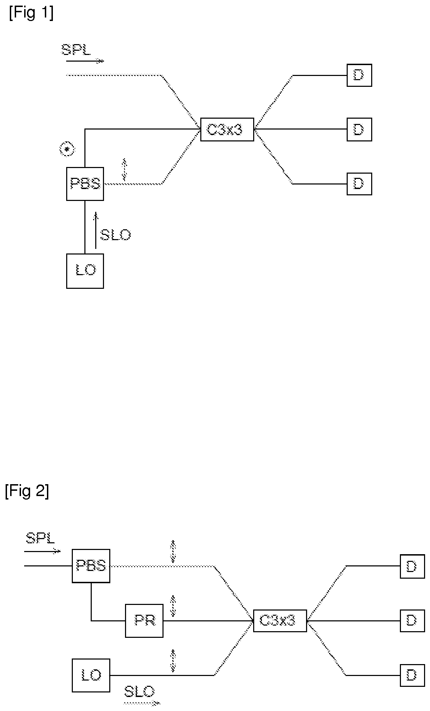

Le principe de fonctionnement de l'état de l'art est basé sur deux mises en oeuvre (respectivement illustrées par les figures 1 et 2) permettant de réaliser une détection cohérente optique qui repose sur le mélange du signal reçu avec une seconde onde optique dite « d'oscillateur local », suivi de la détection par les photo-détecteurs. Cette onde optique (dit aussi signal de battement, ou signal d'oscillation), générée localement au niveau du récepteur, est issue de l'oscillateur local (LO) ainsi appelé par analogie avec le domaine de la radio. L'avantage en termes de sensibilité par rapport à une détection directe du signal sur un photo-détecteur s'explique par le fait que la puissance du signal électrique détecté est multipliée par un facteur dépendant de la puissance optique du signal d'oscillation, tandis que le bruit propre du photo-détecteur reste inchangé. On notera que la communauté optique appelle « mélange » l'ajout au signal reçu du signal issu de l'oscillateur local sur un photo-détecteur.

L'un des problèmes des récepteurs cohérents précédemment décrits, est la nécessité d'un contrôle de la polarisation optique du signal à l'entrée, pour garantir la condition de cohérence entre les deux ondes, signal reçu et signal d'oscillation. En effet, le signal résultant de la multiplication du signal optique avec le signal d'oscillation dépend des polarisations optiques respectives des deux signaux, il peut par exemple s'annuler si elles sont orthogonales. Il faut donc s'assurer d'avoir des signaux (signal reçu et signal d'oscillation) ayant des axes de polarisation parallèles. Compte tenu de la variation aléatoire de l'état de polarisation (SOP - State Of Polarization) du signal dans la fibre, il est nécessaire d'utiliser en réception un montage compatible avec la diversité de polarisation. En pratique, cette opération peut s'effectuer à l'aide d'un cube séparateur de polarisations (PBS). La première variante de mise en oeuvre (figure 1) propose de séparer le signal d'oscillation (SLO) en deux composantes orthogonales pour réaliser un mélange indépendamment du SOP du signal. Pour la seconde variante de mise en oeuvre (figure 2), le principe inverse est utilisé en séparant le signal reçu (SPL) en deux composantes orthogonales (via le séparateur de polarisation PBS) pour réaliser un mélange avec un signal SLO polarisé. Pour que le mélange s'effectue sur la base d'un seul axe de polarisation, un des axes de polarisation du séparateur PBS subit une rotation de 90°. Dans les deux variantes, le coupleur trois-vers-trois C3x3 permet de s'assurer que, quel que soit l'état de polarisation du signal optique reçu, il effectuera un battement avec le signal SLO sur un même axe de polarisation optique. Les trois signaux optiques résultants sont similaires car chacun correspond au même battement entre le signal SLO et le signal SPL, et sont détectés électroniquement par trois photo-détecteurs D.

Cette solution a pour inconvénient d'atténuer le signal optique vers chacun des photo-détecteurs D d'environ 6dB, ceci correspondant à la perte optique du coupleur optique C3x3. Un autre inconvénient est l'usage de trois photo-détecteurs D complexifiant le câblage et augmentant le coût de l'installation.

Un des buts de l'invention est de remédier à ces inconvénients de l'état de la technique.

### 3. Exposé de l'invention

L'invention vient améliorer la situation à l'aide d'un dispositif de détection cohérente de données dans un signal optique reçu sur une première fibre optique monomode, dit signal utile, comprenant:
- une deuxième fibre optique monomode recevant un signal optique d'oscillation,
- un dispositif de gestion des polarisations recevant en entrée soit, dans un premier cas, le signal optique d'oscillation, soit, dans un deuxième cas, le signal utile, et fournissant en sortie deux signaux séparés, sur deux guides optiques monomodes,
le dispositif de détection cohérente étant configuré de façon à ce qu'un ensemble des trois signaux constitué par les deux signaux séparés ainsi que par soit, dans le premier cas, le signal utile, soit, dans le deuxième cas, le signal d'oscillation, est présenté à une seule photodiode.

Le dispositif de détection cohérente proposé permet grâce à sa structure innovante, entre autre, de n'utiliser qu'une seule photodiode pour la conversion du signal optique reçu en un signal électrique, plutôt que 3 selon la technique antérieure. Le dispositif est ainsi plus compact, plus facile à miniaturiser et moins coûteux à produire.

Le signal d'oscillation peut être produit à l'extérieur du dispositif, ce qui a pour avantage d'en augmenter la compacité, et de pouvoir utiliser le dispositif dans des configurations requérant différents types de signal d'oscillation, sans avoir à configurer le dispositif lui-même.

Selon un aspect, le dispositif de détection cohérente comprend en outre un oscillateur optique local fournissant le signal d'oscillation sur la deuxième fibre optique monomode. Même si le dispositif proposé est plus compact et versatile s'il n'inclut pas l'oscillateur optique local, il est possible de l'y inclure, ce qui rapproche le dispositif de la technique antérieure et donc rend plus aisées les modifications techniques à apporter à un dispositif de détection cohérente selon la technique antérieure.

Selon un aspect, le signal reçu en entrée par le dispositif de gestion des polarisations est le signal d'oscillation, et le dispositif de gestion des polarisations est un cube séparateur de polarisation.

Grâce à cet aspect, l'état de polarisation du signal n'a pas d'incidence sur l'efficacité de la détection, grâce aux 2 polarisations du signal d'oscillation fournies par le dispositif de gestion des polarisations, qui sont de préférence orthogonales. Le cube séparateur de polarisation, ou "polarization beam splitter" en anglais, a l'avantage d'être compact et de générer moins de pertes optiques qu'un coupleur optique 1-vers-2 avec 2 polariseurs.

Selon un aspect, le signal reçu en entrée par le dispositif de gestion des polarisations est le signal utile, et le dispositif de gestion des polarisations est un cube séparateur de polarisation avec un rotateur de polarisation connecté à une de ses sorties.

Grâce à cet aspect, l'état de polarisation du signal n'a pas d'incidence sur l'efficacité de la détection car le rotateur a pour effet que le mélange des trois signaux s'effectue sur la base d'un seul axe de polarisation. Les axes de polarisation des trois signaux sont alignés, permettant ainsi que le battement optique soit le plus efficace possible

Selon un aspect, l'ensemble des trois signaux est produit par un coupleur trois-vers-un comprenant trois entrées monomodes polarisées et une sortie multimode.

Un coupleur 3x1 monomode vers multimode présente les avantages d'être plus efficace, moins coûteux et plus compact que le coupleur 3x3 de la technique antérieure. Selon un aspect, l'ensemble des trois signaux est produit par une lentille optique focalisant les trois signaux vers la photodiode.

Par rapport à un coupleur 3x1, une lentille optique ne présente aucune perte optique, mais est de fabrication plus complexe et est plus fragile.

Selon un aspect, l'ensemble des trois signaux est produit par une optique intégrée rapprochant les trois signaux vers la photodiode.

L'optique intégrée ne présente également aucune perte optique, et présente les avantages de la robustesse et de la compacité mais nécessite une zone de photo-détection géométriquement large, ce qui peut être un désavantage pour le très haut débit.

Selon un aspect, les deux guides optiques monomodes en sortie du dispositif de gestion des polarisations sont des fibres optiques monomodes.

Selon un aspect, les deux guides optiques monomodes en sortie du dispositif de gestion des polarisations sont des guides en optique intégrées.

Cet aspect permet un dispositif plus compact et une intégration élevée de ses composants.

Certains des aspects du dispositif de détection cohérente qui viennent d'être décrits peuvent être mis en oeuvre indépendamment les uns des autres ou en combinaison les uns avec les autres.

L'invention concerne aussi un procédé de détection cohérente de données dans un signal optique reçu sur une fibre optique monomode, dit signal utile, mis en oeuvre par un dispositif de détection cohérente conforme à celui qui vient d'être décrit, comprenant les étapes suivantes:
- réception du signal utile à partir de la première fibre optique monomode,
- réception d'un signal d'oscillation à partir d'une deuxième fibre optique monomode,
- séparation de l'un des deux signaux, signal d'oscillation dans un premier cas, ou signal utile dans un deuxième cas, en deux signaux séparés, à l'aide d'un cube séparateur de polarisation, vers deux guides optiques monomodes,
- présentation à une seule photodiode, d'un ensemble de trois signaux constitué par les deux signaux séparés ainsi que le signal non-séparé qui est soit le signal utile dans le premier cas, soit le signal d'oscillation dans le deuxième cas,
- détection par la photodiode des données du signal utile.

Ce procédé s'applique au dispositif de détection cohérente qui vient d'être décrit, dans tous ses modes de réalisation.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
[Fig 1] La figure 1 présente de façon schématique un premier exemple de dispositif de détection cohérente de données dans un signal optique reçu sur une fibre optique monomode, selon la technique antérieure,
[Fig 2] La figure 2 présente de façon schématique un second exemple de dispositif de détection cohérente de données dans un signal optique reçu sur une fibre optique monomode, selon la technique antérieure,
[Fig 3] La figure 3 présente de façon schématique un premier exemple de dispositif de détection cohérente de données dans un signal optique reçu sur une fibre optique monomode, selon un aspect de l'invention,
[Fig 4] La figure 4 présente de façon schématique un second exemple de dispositif de détection cohérente de données dans un signal optique reçu sur une fibre optique monomode, selon un aspect de l'invention,
[Fig 5] La figure 5 présente de façon schématique un troisième exemple de dispositif de détection cohérente de données dans un signal optique reçu sur une fibre optique monomode, selon un aspect de l'invention,
[Fig 6] La figure 6 présente de façon schématique un quatrième exemple de dispositif de détection cohérente de données dans un signal optique reçu sur une fibre optique monomode, selon un aspect de l'invention,
[Fig 7] La figure 7 présente de façon schématique un cinquième exemple de dispositif de détection cohérente de données dans un signal optique reçu sur une fibre optique monomode, selon un aspect de l'invention,
[Fig 8] La figure 8 présente de façon schématique un sixième exemple de dispositif de détection cohérente de données dans un signal optique reçu sur une fibre optique monomode, selon un aspect de l'invention.

### 5. Description détaillée d'au moins un mode de réalisation de l'invention

Le principe de fonctionnement de l'état de l'art a été présenté ci-dessus, en relation avec les figures 1 et 2 qui ne seront pas décrites à nouveau.

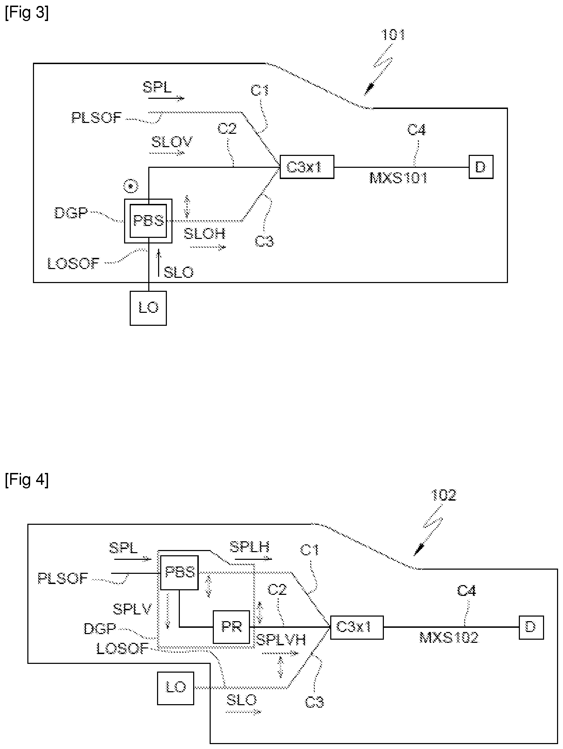

La figure 3 présente un premier exemple de dispositif de détection cohérente de données dans un signal optique reçu sur une fibre optique monomode, selon un aspect de l'invention.

Le dispositif de détection 101 comprend un dispositif de gestion des polarisations, DGP qui est par exemple un cube séparateur de polarisations, PBS (ce cube est appelé "polarization beam splitter" en anglais), un coupleur trois-vers-un monomode vers multimode C3x1, ainsi qu'un photo-détecteur D, par exemple une photodiode.

Le dispositif de détection 101 peut aussi comprendre un oscillateur local LO, mais cet oscillateur LO peut avantageusement être un élément indépendant et externe connecté au dispositif 101 par une fibre optique monomode, LOSOF.

Les entrées monomodes du coupleur C3x1 sont connectées à trois fibres optiques monomode C1, C2 et C3. La sortie multimode du coupleur C3x1 est connectée à une fibre optique multimode C4.

L'oscillateur LO fournit un signal d'oscillation SLO, présenté en entrée au cube séparateur de polarisations PBS sur la fibre optique monomode LOSOF. Le cube PBS sépare le signal SLO en deux signaux distincts, SLOH et SLOV, ces deux signaux basés sur le signal SLO présentant des polarisations différentes, de préférence orthogonales entre elles. Les signaux SLOH et SLOV sont émis par le cube PBS sur deux des trois fibres optiques monomodes C1, C2 ou C3 en entrées du coupleur C3x1 (par exemple C2 et C3 sur la figure 3).

Le dispositif 101 est aussi configuré pour recevoir sur une fibre optique monomode PLSOF un signal optique de données SPL. Celle des trois fibres optiques monomodes C1, C2 ou C3 qui n'est pas connectée aux deux sorties du cube PBS (par exemple C1 sur la figure 3) est la même fibre que la fibre PLSOF.

Les trois signaux SPL, SLOH et SLOV sont ainsi mélangés par le coupleur C3x1, résultant en un signal MXS101 émis en sortie par le coupleur C3x1 sur la fibre optique multimode C4.

La fibre multimode C4 transportant le signal MXS101 est connectée à la photodiode D. Grâce à ce mode de réalisation, le dispositif 101 permet une détection plus efficace des données contenues dans le signal SPL qu'il reçoit en entrée, car les pertes optiques entre ce signal SPL et le signal MXS101 sont inférieures à 1 dB.

La figure 4 présente un second exemple de dispositif de détection cohérente de données dans un signal optique reçu sur une fibre optique monomode, selon un aspect de l'invention.

Le dispositif de détection 102 diffère du dispositif 101 en ce que le dispositif de gestion des polarisations DGP comprend un cube séparateur de polarisation PBS et un rotateur de polarisation PR.

Ce second mode de réalisation diffère aussi du premier en ce que le signal présenté au dispositif PBS n'est pas le signal d'oscillation SLO mais le signal optique de données SPL. Le cube PBS sépare le signal SPL en deux signaux distincts, SPLH et SPLV, ces deux signaux basés sur le signal SPL présentant des polarisations différentes, de préférence orthogonales entre elles. Le signal SPLV est alors présenté au rotateur PR qui fait subir une rotation de 90° àson axe de polarisation, produisant le signal SPLVH. On comprend que grâce à cette configuration les signaux SPLH et SPLVH ont le même axe de polarisation.

Les signaux SPLH et SPLVH sont émis par la combinaison du cube PBS et du rotateur PR sur deux des trois fibres optiques monomodes C1, C2 ou C3 (par exemple C1 et C2 sur la figure 4) en entrées du coupleur C3x1. La troisième fibre optique monomode (par exemple C3 sur la figure 4) est la même fibre que la fibre LOSOF.

Les trois signaux SPLH, SPLVH et SLO sont ainsi mélangés par le coupleur C3x1, résultant en un signal MXS102 émis en sortie par le coupleur C3x1 sur la fibre optique multimode C4.

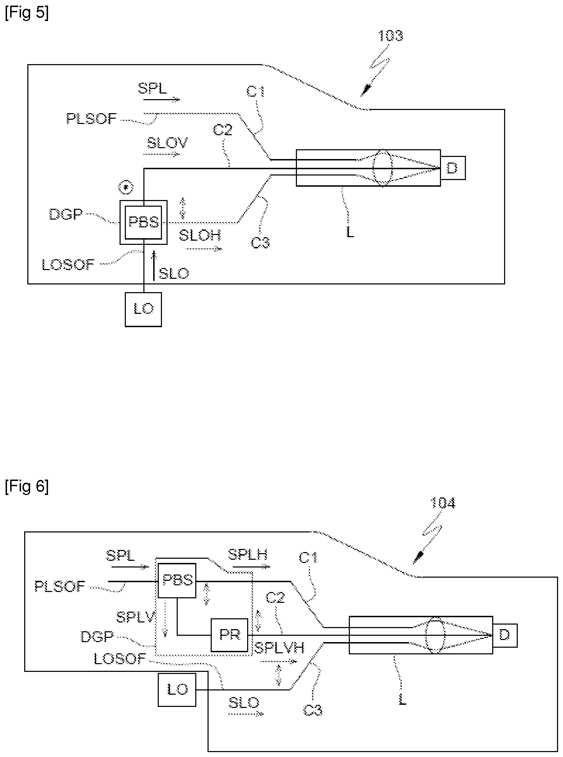

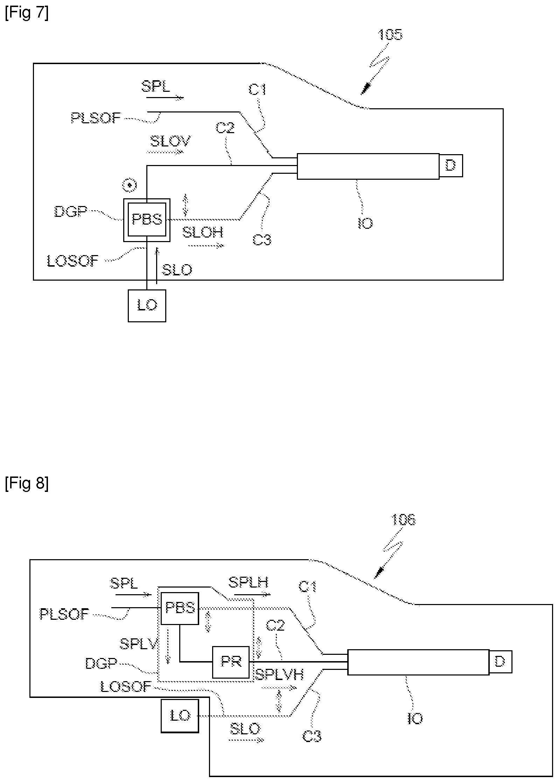

La fibre multimode C4 transportant le signal MXS102 est connectée à la photodiode D. Grâce à ce mode de réalisation, le dispositif 102 permet, comme le dispositif 101, une détection plus efficace des données contenues dans le signal SPL qu'il reçoit en entrée, car les pertes optiques entre ce signal SPL et le signal MXS102 sont inférieures à 1 dB. Les figures 5 et 7 présentent de façon schématique des exemples de dispositif de détection différant du dispositif 101 de la figure 3 d'une part par la façon dont sont mélangés les signaux optique monomodes SPL, SLOH et SLOV, et d'autre part par la façon dont est présenté le mélange résultant à la photodiode D.

Dans le dispositif 103 de la figure 5, le coupleur C3x1 et la fibre multimode C4 sont remplacés par une lentille optique L rapprochant les trois signaux optiques monomodes SPL, SLOH et SLOV et les focalisant directement sur une seule photodiode D.

Dans le dispositif 105 de la figure 7, le coupleur C3x1 et la fibre multimode C4 sont remplacés une optique intégrée la rapprochant les signaux optiques monomodes SPL, SLOH et SLOV de façon à illuminer directement sur la photodiode D.

Les figures 6 et 8 présentent de façon schématique des exemples de dispositif de détection différant du dispositif 102 de la figure 4 d'une part par la façon dont sont mélangés les signaux optique monomodes SPLH, SPLVH et SLO, et d'autre part par la façon dont est présenté le mélange résultant à la photodiode D.

Dans le dispositif 104 de la figure 6, le coupleur C3x1 et la fibre multimode C4 sont remplacés par une lentille optique L rapprochant les signaux optiques monomodes SPLH, SPLVH et SLO et les focalisant directement sur la photodiode D.

Dans le dispositif 106 de la figure 8, le coupleur C3x1 et la fibre multimode C4 sont remplacés une optique intégrée IO rapprochant les signaux optiques monomodes SPLH, SPLVH et SLO de façon à illuminer directement sur la photodiode D.

Les exemples de réalisation de l'invention qui viennent d'être présentés ne sont que quelques uns des modes de réalisation envisageables. Ils montrent que l'invention permet de réaliser sans perte optique significative une réception de signaux optiques par exemple émanant d'un réseau optique passif (PON). En effet dans un PON, les fibres optiques qui relient le terminal de ligne optique (OLT) du central aux différents terminaux de réseau optique (ONT) chez les abonnés sont des fibres optiques monomodes. Il est donc avantageux d'intégrer les dispositifs de détection proposés dans les ONT pour le sens descendant, ainsi que dans l'OLT pour le sens remontant.

## Revendications

1. **Dispositif de détection cohérente** de données dans un signal optique reçu sur une première fibre optique monomode (PLSOF), dit signal utile (SPL), comprenant:
- une deuxième fibre optique monomode (LOSOF) recevant un signal optique d'oscillation (SLO),
- un dispositif de gestion des polarisations (DGP) recevant en entrée soit, dans un premier cas, le signal optique d'oscillation (SLO), soit, dans un deuxième cas, le signal utile (SPL), et fournissant en sortie deux signaux séparés (SLOV, SLOH; SPLVH, SPLH), sur deux guides optiques monomodes,
le dispositif de détection cohérente étant configuré de façon à ce qu'un ensemble des trois signaux constitué par les deux signaux séparés ainsi que par soit, dans le premier cas, le signal utile (SPL), soit, dans le deuxième cas, le signal d'oscillation (SLO), est présenté à une seule photodiode (D).

2. **Dispositif de détection cohérente** selon la revendication 1, comprenant en outre un oscillateur optique local (LO) fournissant le signal d'oscillation (SLO) sur la deuxième fibre optique monomode (LOSOF).

3. **Dispositif de détection cohérente** selon l'une des revendications 1 ou 2, où le signal reçu en entrée par le dispositif de gestion des polarisations est le signal d'oscillation (SLO), et où le dispositif de gestion des polarisations (DGP) est un cube séparateur de polarisation (PBS).

4. **Dispositif de détection cohérente** selon l'une des revendications 1 ou 2, où le signal reçu en entrée par le dispositif de gestion des polarisations est le signal utile (SPL), et où le dispositif de gestion des polarisations (DGP) est un cube séparateur de polarisation (PBS) avec un rotateur de polarisation (PR) connecté à une de ses sorties.

5. **Dispositif de détection cohérente** selon l'une des revendications 1 à 4, où l'ensemble des trois signaux est produit par un coupleur trois-vers-un (C3x1) comprenant trois entrées monomodes polarisées (C1, C2, C3) et une sortie multimode (C4).

6. **Dispositif de détection cohérente** selon l'une des revendications 1 à 4, où l'ensemble des trois signaux est produit par une lentille optique (L) focalisant les trois signaux vers la photodiode (D).

7. **Dispositif de détection cohérente** selon l'une des revendications 1 à 3, où l'ensemble des trois signaux est produit par une optique intégrée (IO) rapprochant les trois signaux vers la photodiode (D).

8. **Dispositif de détection cohérente** selon l'une des revendications précédentes, où les deux guides optiques monomodes en sortie du dispositif de gestion des polarisations (DGP) sont des fibres optiques monomodes.

9. **Dispositif de détection cohérente** selon l'une des revendications 1 à 7, où les deux guides optiques monomodes en sortie du dispositif de gestion des polarisations (DGP) sont des guides en optique intégrées.

10. **Procédé de détection cohérente** de données dans un signal optique reçu sur une fibre optique monomode (PLSOF), dit signal utile (SPL), mis en oeuvre par un dispositif de détection cohérente (101; 102; 103; 104; 105; 106) conforme à la revendication 1, comprenant les étapes suivantes:
- réception du signal utile à partir de la première fibre optique monomode (PLSOF),
- réception d'un signal d'oscillation (SLO) à partir d'une deuxième fibre optique monomode (LOSOF),
- séparation de l'un des deux signaux, signal d'oscillation (SLO) dans un premier cas, ou signal utile (SPL) dans un deuxième cas, en deux signaux séparés, à l'aide d'un cube séparateur de polarisation (PBS), vers deux guides optiques monomodes,
- présentation à une seule photodiode (D), d'un ensemble de trois signaux constitué par les deux signaux séparés ainsi que le signal non-séparé qui est soit le signal utile (SPL) dans le premier cas, soit le signal d'oscillation (SLO) dans le deuxième cas,
- détection par la photodiode (D) des données du signal utile.

## Patentansprüche

1. Vorrichtung zur kohärenten Detektion von Daten in einem auf einer ersten optischen Monomode-Faser (PLSOF) empfangenen optischen Signal, Nutzsignal (SPL) genannt, die enthält:
- eine zweite optische Monomode-Faser (LOSOF), die ein optisches Schwingungssignal (SLO) empfängt,
- eine Verwaltungsvorrichtung der Polarisationen (DGP), die am Eingang entweder in einem ersten Fall das optische Schwingungssignal (SLO) oder in einem zweiten Fall das Nutzsignal (SPL) empfängt und am Ausgang zwei getrennte Signale (SLOV, SLOH; SPLVH, SPLH) auf zwei optischen Monomode-Leitern liefert,
wobei die Vorrichtung zur kohärenten Detektion so konfiguriert ist, dass eine Gruppe von drei Signalen, die von den zwei getrennten Signalen sowie im ersten Fall vom Nutzsignal (SPL) oder im zweiten Fall vom Schwingungssignal (SLO) gebildet wird, einer einzigen Photodiode (D) präsentiert wird.

2. Vorrichtung zur kohärenten Detektion nach Anspruch 1, die außerdem einen lokalen optischen Oszillator (LO) enthält, der das Schwingungssignal (SLO) auf der zweiten optischen Monomode-Faser (LOSOF) liefert.

3. Vorrichtung zur kohärenten Detektion nach einem der Ansprüche 1 oder 2, wobei das von der Verwaltungsvorrichtung der Polarisationen am Eingang empfangene Signal das Schwingungssignal (SLO) ist, und wobei die Verwaltungsvorrichtung der Polarisationen (DGP) ein Polarisationsteilerwürfel (PBS) ist.

4. Vorrichtung zur kohärenten Detektion nach einem der Ansprüche 1 oder 2, wobei das am Eingang von der Verwaltungsvorrichtung der Polarisationen empfangene Signal das Nutzsignal (SPL) ist, und wobei die Verwaltungsvorrichtung der Polarisationen (DGP) ein Polarisationsteilerwürfel (PBS) mit einem Polarisationsrotator (PR) ist, der mit einem seiner Ausgänge verbunden ist.

5. Vorrichtung zur kohärenten Detektion nach einem der Ansprüche 1 bis 4, wobei die Gruppe der drei Signale von einem Drei-nach-Eins-Koppler (C3x1) erzeugt wird, der drei polarisierte Monomode-Eingänge (C1, C2, C3) und einem Multimode-Ausgang (C4) enthält.

6. Vorrichtung zur kohärenten Detektion nach einem der Ansprüche 1 bis 4, wobei die Gruppe der drei Signale von einer optischen Linse (L) erzeugt wird, die die drei Signale zur Photodiode (D) fokussiert.

7. Vorrichtung zur kohärenten Detektion nach einem der Ansprüche 1 bis 3, wobei die Gruppe der drei Signale von einer integrierten Optik (IO) erzeugt wird, die die drei Signale der Photodiode (D) annähert.

8. Vorrichtung zur kohärenten Detektion nach einem der vorhergehenden Ansprüche, wobei die zwei optischen Monomode-Leiter am Ausgang der Verwaltungsvorrichtung der Polarisationen (DGP) optische Monomode-Fasern sind.

9. Vorrichtung zur kohärenten Detektion nach einem der Ansprüche 1 bis 7, wobei die zwei optischen Monomode-Leiter am Ausgang der Verwaltungsvorrichtung der Polarisationen (DGP) integrierte optische Leiter sind.

10. Verfahren zur kohärenten Detektion von Daten in einem auf einer optischen Monomode-Faser (PLSOF) empfangenen optischen Signal, Nutzsignal (SPL) genannt, das von einer Vorrichtung zur kohärenten Detektion (101; 102; 103; 104; 105; 106) gemäß Anspruch 1 durchgeführt wird, das die folgenden Schritte enthält:
- Empfang des Nutzsignals ausgehend von der ersten optischen Monomode-Faser (PLSOF),
- Empfang eines Schwingungssignals (SLO) ausgehend von einer zweiten optischen Monomode-Faser (LOSOF),
- Trennung eines der zwei Signale, das Schwingungssignal (SLO) in einem ersten Fall oder das Nutzsignal (SPL) in einem zweiten Fall, mit Hilfe eines Polarisationsteilerwürfels (PBS) in zwei getrennte Signale zu zwei optischen Monomode-Leitern,
- Präsentieren einer einzigen Photodiode (D) einer Gruppe von drei Signalen, die von den zwei getrennten Signalen sowie vom nicht getrennten Signal gebildet wird, das entweder das Nutzsignal (SPL) im ersten Fall oder das Schwingungssignal (SLO) im zweiten Fall ist,
- Detektion der Daten des Nutzsignals durch die Photodiode (D).

## Claims

1. **Device for coherent detection** of data in an optical signal, called the payload signal (SPL), received on a first single-mode optical fiber (PLSOF), comprising:
- a second single-mode optical fiber (LOSOF) that receives an optical oscillation signal (SLO),
- a polarization management device (DGP) that receives as input either, in a first case, the optical oscillation signal (SLO), or, in a second case, the payload signal (SPL), and that delivers as output two split signals (SLOV, SLOH; SPLVH, SPLH), on two single-mode optical guides,
the coherent detection device being configured so that a set of three signals consisting of the two split signals and either, in the first case, the payload signal (SPL), or, in the second case, the oscillation signal (SLO), is presented to a single photodiode (D).

2. **Coherent detection device** according to Claim 1, further comprising a local optical oscillator (LO) that delivers the oscillation signal (SLO) on the second single-mode optical fiber (LOSOF).

3. **Coherent detection device** according to either of Claims 1 and 2, wherein the signal received as input by the polarization management device is the oscillation signal (SLO), and wherein the polarization management device (DGP) is a polarizing beamsplitter (PBS).

4. **Coherent detection device** according to either of Claims 1 and 2, wherein the signal received as input by the polarization management device is the payload signal (SPL), and wherein the polarization management device (DGP) is a polarizing beamsplitter (PBS) with a polarization rotator (PR) connected to one of its outputs.

5. **Coherent detection device** according to one of Claims 1 to 4, wherein the set of three signals is produced by a three-to-one coupler (C3x1) comprising three polarized single-mode inputs (C1, C2, C3) and one multimode output (C4) .

6. **Coherent detection device** according to one of Claims 1 to 4, wherein the set of three signals is produced by an optical lens (L) that focuses the three signals on the photodiode (D).

7. **Coherent detection device** according to one of Claims 1 to 3, wherein the set of three signals is produced by an integrated optic (IO) that brings the three signals closer to the photodiode (D).

8. **Coherent detection device** according to one of the preceding claims, wherein the two single-mode optical guides at the output of the polarization management device (DGP) are single-mode optical fibers.

9. **Coherent detection device** according to one of Claims 1 to 7, wherein the two single-mode optical guides at the output of the polarization management device (DGP) are integrated optical guides.

10. **Method for coherent detection** of data in an optical signal, called the payload signal (SPL), received on a single-mode optical fiber (PLSOF), implemented by a coherent detection device (101; 102; 103; 104; 105; 106) according to Claim 1, and comprising the following steps:
- receiving the payload signal from the first single-mode optical fiber (PLSOF),
- receiving an oscillation signal (SLO) from a second single-mode optical fiber (LOSOF),
- splitting one of the two signals, the oscillation signal (SLO) in a first case, or the payload signal (SPL) in a second case, into two signals split, using a polarizing beamsplitter (PBS), between two single-mode optical guides,
- presenting, to a single photodiode (D), a set of three signals consisting of the two split signals as well as the non-split signal which is either the payload signal (SPL) in the first case, or the oscillation signal (SLO) in the second case,
- detecting with the photodiode (D) the data of the payload signal.
